# EUROPÄISCHE PATENTSCHRIFT

(11) **EP 3 380 419 B1**
(45) Veröffentlichungstag und Bekanntmachung des Hinweises auf die Patenterteilung: **01.01.2020**
(21) Anmeldenummer: 16797951.7
(22) Anmeldetag: 18.11.2016
(51) Int. Cl.: B65G 47/248, B26D 7/32

(54) **VERFAHREN UND VORRICHTUNG ZUM PORTIONIEREN VON LEBENSMITTELSCHEIBEN MIT FORMVERÄNDERUNG, INSBESONDERE FALTUNG, DER PORTION**
METHOD AND DEVICE FOR PORTIONING SLICES OF FOOD WITH CHANGE OF SHAPE, IN PARTICULAR FOLDING, OF THE PORTION
PROCÉDÉ ET DISPOSITIF DE MISE EN PORTIONS DE TRANCHES D'UN PRODUIT ALIMENTAIRE AVEC MODIFICATION DE FORME, NOTAMMENT PLIAGE, DE LA PORTION

(30) Priorität: 23.11.2015 DE 102015223082
(43) Veröffentlichungstag der Anmeldung: 03.10.2018
(73) Patentinhaber: GEA Food Solutions Germany GmbH, 35216 Biedenkopf-Wallau (DE)
(72) Erfinder: MIRKO, Valeri, 25036 Palazzolo Sull'Oglio (IT); STRANZKE, Günter, 87471 Durach (DE); MERK, Andreas, 87439 Kempten (DE)
(74) Vertreter: Kutzenberger Wolff & Partner
(86) Internationale Anmeldenummer: PCT/EP2016/078191
(87) Internationale Veröffentlichungsnummer: WO 2017/089242

(56) Entgegenhaltungen:
- EP-A2- 1 911 555
- WO-A1-2010/105831
- JP-A- 2000 263 494
- US-A1- 2015 047 482

## Beschreibung

Die vorliegende Erfindung betrifft ein Verfahren zum Aufschneiden eines Lebensmittelriegels in Lebensmittelscheiben und zum Portionieren von Lebensmittelscheiben, mit einer Aufschneidevorrichtung, die ein Schneidmesser aufweist, mit dem die Lebensmittelscheiben von dem Lebensmittelregel abgetrennt und zu Portionen konfiguriert werden. Des Weiteren betrifft die vorliegende Erfindung eine Aufschneidevorrichtung.

Das gattungsgemäße Verfahren ist von sogenannten Hochleistungsaufschneidevorrichtungen bekannt, wie sie beispielsweise in der DE 10001338 A, der DE 10 2011 114 180 A1, der EP 0107056 A1, der EP 0867263 A1 sowie der GB 2386317 beschrieben werden.

Bei diesen sogenannten "Slicern" werden stangenförmige oder anders geformte Lebensmittelriegel, beispielsweise Wurst, Käse, Schinken, Rohschinken oder dergleichen mit einer sehr hohen Schneidleistung, beispielsweise bis zu 1.000 Schnitte pro Minute oder mehr, in Scheiben geschnitten. Dabei wird beispielsweise der Lebensmittelriegel mittels eines geregelten Antriebs durch eine ortsfeste Schneidebene, in der der Schnitt durch ein schnell bewegtes in der Regel rotierendes Schneidmesser erfolgt, transportiert. Die Scheibenstärke ergibt sich aus der Vorschubstrecke des Lebensmittelriegels zwischen zwei Schnitten. Demnach erfolgt bei einer konstanten Schneidmesserdrehgeschwindigkeit die Regelung der Scheibenstärke über die Vorschubgeschwindigkeit des Lebensmittelriegels. Die geschnittenen Scheiben werden mit konstanter Scheibenzahl und/oder gewichtsgenau zu Portionen zusammengefasst und verpackt. Dabei soll die Verpackung möglichst optimal ausgenutzt und/oder die Portion möglichst ansprechend aussehen. Die EP 2 743 193 A1 offenbart ein Verfahren zum Falten einer Portion, das jedoch sehr aufwändig ist. Ein Verfahren nach dem Oberbegriff von Anspruch 1 ist bekannt aus der Veröffentlichung EP 1 911 555 A2; eine Vorrichtung nach dem Oberbegriff von Anspruch 9 ist bekannt aus der Veröffentlichung WO 2010/105831 A1.

Es war deshalb die Aufgabe der vorliegenden Erfindung ein Verfahren zur Verfügung zu stellen, mit dem diese Voraussetzungen erfüllt werden können und das die Nachteile des Standes der Technik nicht aufweist.

Gelöst wird die Aufgabe mit einem Verfahren zum Aufschneiden eines Lebensmittelriegels in Lebensmittelscheiben und zum Portionieren von Lebensmittelscheiben, mit einer Aufschneidevorrichtung, die ein Schneidmesser aufweist, mit dem die Lebensmittelscheiben von dem Lebensmittelriegel abgetrennt und zu Portionen konfiguriert werden, die entlang einer Transportebene abtransportiert werden, wobei die Portion anschließend in ihrer Form verändert, insbesondere gefaltet wird, indem ein Teil der Portion von der Transportebene abgehoben und auf den anderen Teil der Portion gelegt wird.

Die zu dem erfindungsgemäßen Verfahren gemachten Ausführungen gelten für die erfindungsgemäße Vorrichtung gleichermaßen und umgekehrt.

Die vorliegende Erfindung betrifft ein Verfahren zum Aufschneiden eines Lebensmittelriegels in Lebensmittelscheiben. Derartige Lebensmittelriegel, beispielsweise Wurst, Käse oder Schinken haben typischerweise eine Länge zwischen 300 und 3.500 Millimetern. Diese Lebensmittelriegel werden in die Aufschneidevorrichtung eingelegt und mittels eines Transportmittels in Richtung eines rotierenden Schneidmessers kontinuierlich oder intermittierend transportiert. Bei dem Schneidmesser kann es sich beispielsweise um ein Kreis- oder Sichelmesser handeln. Dieses Schneidmesser trennt Lebensmittelscheiben von dem vorderen Ende des Lebensmittelriegels ab. Die so abgetrennten Scheiben fallen auf eine Portioniervorrichtung, insbesondere auf einen Ablagetisch, der mehrere Lebensmittelscheiben zu einer Portion zusammenfasst. Sobald die jeweilige Portion fertiggestellt ist, wird sie aus dem Ablagebereich abtransportiert und eine neue Portion kann aufgeschnitten werden. Der Fachmann versteht, dass mehrere Lebensmittelriegel gleichzeitig aufgeschnitten und demnach mehrere Portionen gleichzeitig erstellt werden können. Innerhalb einer Portion können die Lebensmittelscheiben beispielsweise gestapelt oder geschindelt werden. Des Weiteren kann die jeweilig einzelne Lebensmittelscheibe vor und/oder bei und/oder nach ihrer Ablage geformt werden. Dafür sind dem Fachmann sogenannte Faltwellen bekannt. Die fertiggestellte Portion wird sodann auf einer Transportebene abtransportiert. Diese Transporteben ist beispielsweise die Auflagefläche eines oder mehrerer Transportbänder.

Erfindungsgemäß wird die Portion nach deren Fertigstellung, d.h. wenn alle Lebensmittelscheiben zu einer Portion aufgeschnitten worden sind und die Portion eine gewisse Konfiguration aufweist, noch einmal geformt, insbesondere gefaltet. Falten im Sinne der Erfindung bedeutet, dass ein Abschnitt der Portion über den anderen gelegt wird. Diese erfolgt indem ein Teil der Portion von der Transportebene abgehoben und über den anderen Teil, der vorzugsweise auf der Transportebene verbleibt, gelegt wird. Durch das Formen/Falten passt die Portion in eine Verpackung, für die sie ursprünglich zu groß gewesen wäre.

Nach dem Formen wird die jeweilige Portion in Richtung einer Verpackungsmaschine transportiert und dort in eine Verpackung eingelegt. Vorher kann sie noch wahlweise mit einer anderen Portion kombiniert werden. Das Falten kann sowohl parallel als auch quer zur Transportrichtung der Portion erfolgen. Gemäß einer weiteren bevorzugten Ausführungsform wird die Portion in einem Winkel zur Transportebene geformt/gefaltet, so dass sie hinterher beispielsweise V-förmig ist.

Vorzugsweise wird die Portion während ihres Abtransports geformt.

Vorzugsweise wird die zu formende Portion während des Formens zumindest zeitweise nicht weitertransportiert. Alternativ oder zusätzlich wird die Portion beim Formen weitertransportiert, d.h. sie wird zumindest zeitweise beim Formen bewegt. Vorzugsweise unterstützt diese Bewegung das Formen, insbesondere das Falten der Portion.

Gemäß einer bevorzugten Ausführungsform des erfindungsgemäßen Verfahrens wird das, bezogen auf die Transportrichtung, vordere Ende der Portion über das, bezogen auf die Transportrichtung, hintere Ende gelegt, insbesondere gedreht. Vorzugsweise wird das vordere Ende der Portion dabei von der Transportebene des Transportmittels abgehoben und dann auf den hinteren Abschnitt gelegt.

Vorzugsweise wird zum Formen ein Hebel verwendet. Vorzugweise ist dieser Hebel dreh- und/oder schwenkbar insbesondere relativ zu dem Transportmittel vorgesehen. Vorzugsweise ist der Hebel unterhalb der Transportebene des Transportmittels vorgesehen und wird zum Formen in diese hinein und über diese hinaus gedreht. Dabei hebt er einen Teil der Portion ab und dreht diesen über den Teil, der auf dem Transportband verbleibt.

Alternativ oder zusätzlich kann das Formen mit einem Fluidum, insbesondere Druckluft erfolgen. Das Fluidum hebt einen Teil der Portion ab und dreht diesen über den Teil, der auf dem Transportband verbleibt.

Vorzugsweise werden mehrere Portionen gleichzeitig in mehreren Spuren aufgeschnitten und/oder geformt.

Vorzugsweise werden die Portionen relativ zueinander ausgerichtet und dann gefaltet. Die Ausrichtung erfolgt dabei vorzugsweise so, dass alle Portionen zumindest im Wesentlichen dieselbe Position relativ zu dem Form-/Faltmittel haben. Besonders bevorzugt werden mehrere Portionen mit einem Form-/Faltmittel geformt/gefaltet, insbesondere gleichzeitig geformt/gefaltet.

Ein weiterer Gegenstand der vorliegenden Erfindung ist eine Vorrichtung zum Aufschneiden von Lebensmittelriegeln in Lebensmittelscheiben, die nach dem Abtrennen auf einen Ablagetisch fallen und dort zu einer Portion konfiguriert werden, wobei die Vorrichtung ein Mittel, insbesondere ein Faltmittel aufweist, das die Portion in ihrer Form verändert, wobei das Mittel unterhalb der Transportebene des Fördermittels angeordnet ist.

Die zu der erfindungsgemäßen Vorrichtung gemachten Ausführungen gelten für das erfindungsgemäße Verfahren gleichermaßen und umgekehrt.

Erfindungsgemäß weist die Vorrichtung ein Mittel zum Formen der Scheiben einer Portion auf. Diese Mittel befindet sich bezogen auf die Transportrichtung der Portion vorzugsweise stromabwärts von dem Ablagetisch, auf dem die jeweilige Portion gebildet wird. Weiterhin erfindungsgemäß befindet sich das Form-/Faltmittel unterhalb der Transportebene des Fördermittels. Unterhalb im Sinne der Erfindung bedeutet, dass es nicht in die Transportebene hineinragt. Zum Formen/Falten kann es jedoch zumindest teilweise, zeitweise sowie reversibel aus der Transportebene der Portion herausragen.

Für den Fall, dass die Vorrichtung mehrspurig vorgesehen ist, d.h. dass mehrere Lebensmittelriegel zumindest zeitweise gleichzeitig aufgeschnitten werden, kann ein Mittel zum Formen der Portion pro Spur vorgesehen sein, die unabhängig voneinander betreibbar sind. Es ist aber auch möglich, dass ein Mittel für mehrere Spuren oder ein Mittel für alle Spuren eingesetzt wird.

Vorzugsweise ist das Mittel im Bereich des Fördermittels vorgesehen, das die Portion in Richtung einer Verpackungsmaschine transportiert.

Gemäß einer bevorzugten Ausführungsform weist das Mittel einen Hebel auf, der sich besonders bevorzugt um einen Drehpunkt dreht und/oder geschwenkt wird. Dieser Hebel befindet sich in seiner Ruhestellung vorzugsweise unterhalb einer Transportebene eines Fördermittels, insbesondere eines Förderbandes bzw. mehrerer Förderriemen und ragt zum Formen über diese Ebene hinaus, insbesondere zwischen zwei Förderriemen hindurch. Das Mittel wird zwischen diesen beiden Stellungen hin und her bewegt.

Vorzugsweise weist die Vorrichtung einen Sensor auf, der die Position der Portion auf dem Fördermittel ermittelt. Das Signal dieses Sensors wird vorzugsweise zur Steuerung des Mittels zum Formen und/oder des Transportmittels eingesetzt. Das Signal des Sensors kann aber alternativ oder zusätzlich dazu eingesetzt werden, die Portionen bei einer mehrspurigen Ausführung zueinander und/oder relativ zu dem Form-/Faltmittel auszurichten. Besonders bevorzugt ist ein Sensor pro Spur vorgesehen.

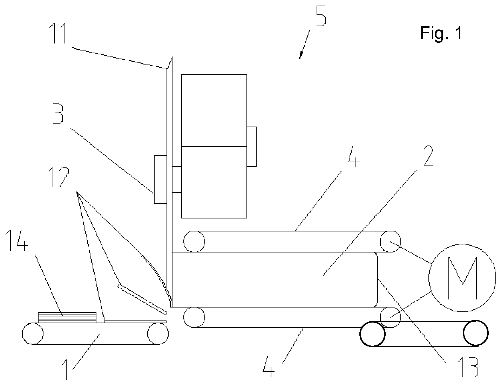

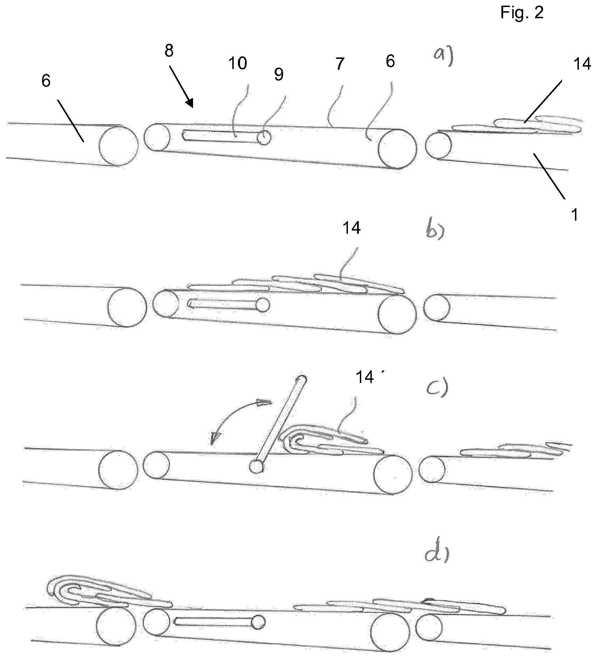

Im Folgenden wird die Erfindung anhand der Figuren 1 und 2 erläutert. Diese Erläuterungen sind lediglich beispielhaft und schränken den allgemeinen Erfindungsgedanken nicht ein.
- **Figur 1**: zeigt eine Aufschneidevorrichtung.
- **Figur 2**: zeigt das erfindungsgemäße Verfahren bzw. die Vorrichtung
- **Figur 3**: zeigt ein weiteren Form-, hier Faltmechanismus
- **Figur 4**: zeigt die erfindungsgemäße Vorrichtung in Draufsicht

**Figur 1** zeigt eine Aufschneidevorrichtung 5. Die Aufschneidevorrichtung 5 weist ein Schneidmesser 11 auf, das ein Lebensmittelprodukt 2 in Lebensmittelscheiben 12 schneidet. Dazu wird jedes Lebensmittelprodukt 2 mit einem Fördermittel 4, hier zwei Förderbändern 4, kontinuierlich oder intermittierend in Richtung einer Schneidebene des Messers 11 transportiert. Das untere Förderband 4 ist gleichzeitig eine Produktauflage. Das Schneidmesser 11 ist an einer sich drehenden Messeraufnahme 3 befestigt und wirkt vorzugsweise mit einer Schneidkante (nicht dargestellt) schneidend zusammen, die beispielsweise am vorderen Ende der Produktauflage 4 vorgesehen ist und die vorzugsweise gemeinsam die Schneidebene definieren. Zwischen dem Messer 11 und der Schneidkante ist ein sogenannter Schneidspalt vorhanden, der möglichst klein sein sollte, jedoch so groß sein muss, dass das Messer die Schneidkante nicht berührt. Dieser Spalt muss regelmäßig eingestellt werden. Dies kann durch eine Bewegung des Messers und/oder der Schneidkante erfolgen. Nach dem Abschneiden fallen die Lebensmittelscheiben auf einen Ablagetisch 1, der mit Transportmitteln, beispielsweise einem Transportband oder mehreren Transportriemen, versehen ist, auf dem sie zu jeweils einer Portion 14, hier einem Stapel, konfiguriert werden. Die fertiggestellten Portionen 14 werden sodann aus dem Schneidmesserbereich abtransportiert und danach verpackt. Die Scheibenstärke ergibt sich aus der Vorschubstrecke des Lebensmittelproduktes zwischen zwei Schnitten. Bei konstanter Messerdrehgeschwindigkeit erfolgt die Regelung der Scheibenstärke über die Vorschubgeschwindigkeit des Lebensmittelproduktes. Die Aufschneidevorrichtung kann pro Vorschubtrasse einen Greifer aufweisen, der das rückwärtige Ende 13 des Lebensmittelproduktes 2 vor oder während des Aufschneidens ergreift und dieses während des Aufschneidens, insbesondere gegen Ende des Aufschneidens, stabilisiert und das Endstück, das nicht aufgeschnitten werden kann, entsorgt.

Vorzugsweise ist die Aufschneidevorrichtung mehrspurig vorgesehen, d.h. dass mehrere Lebensmittelprodukte 2 von einem Messer, insbesondere zumindest zeitweise gleichzeitig oder zumindest zeitweise sequentiell, aufgeschnitten werden. Dafür weist die Vorrichtung für jedes Lebensmittelprodukt eine eigene Spur auf, entlang derer es in Richtung des Messers 11 transportiert wird. Die abgeschnittenen Lebensmittelscheiben werden jeweils zu Portionen konfiguriert.

Wie **Figur 2a** entnommen werden kann, ist stromabwärts von dem Ablagetisch mindestens ein, hier zwei Fördermittel 6 vorgesehen, die die aufgeschnitten Portionen 14 von der Aufschneidevorrichtung in Richtung einer Verpackungsmaschine (nicht dargestellt) transportieren und die Portionen dort in Verpackungen einlegen. Jeder Förderer 6 weist eine Transportebene 7 auf, auf der die Portion transportiert wird. Bei den Förderern kann es sich beispielsweise um ein Endlosband und/oder mehrere Endlosriemen handeln, die jeweils um zwei Rollen umlaufen, wobei mindestens eine Rolle angetrieben ist. Erfindungsgemäß ist mindestens ein Mittel 8 vorgesehen, mit dem die Portion nach deren Ausschnitt geformt werden kann. In dem vorliegenden Fall ist dieses Mittel ein Hebel 10, der um eine Drehachse 9 gedreht werden kann, um ihn aus der dargestellten Ruhestellung in eine formende Stellung zu verdrehen, bei der er zwischen zwei oder mehr Riemen aus der Transportebene 7 herausragt.

Das erfindungsgemäße Verfahren wird nun anhand der **Figuren 2b** - **2d** erläutert. Eine aufgeschnittene und zu einem Schindel konfigurierte Portion 14 wird auf das, bezogen auf die Transportrichtung der Portion erste Transportband 6 gefördert (vergleiche Figur 2b). Sobald es, vorzugsweise vollständig darauf liegt, wird ein Hebel 11 im Uhrzeigersinn um die Rotationsachse 9 gedreht und hebt den vorderen Abschnitt der Portion 14 von der Transportebene 7 ab und schlägt den vorderen Abschnitt auf den hinteren Abschnitt der Portion um, so dass eine gefaltete Portion 14' entsteht, was in Figur 2c dargestellt ist. Der hintere Teil der Portion bleibt dabei auf der Transportebene des Transportbandes liegen. Die gefaltet Portion kann von dem ersten Transportband 6 an ein stromabwärts davon befindliches Transportband übergeben werden und eine nächste Portion wird in den Faltbereich des Transportbandes 6 transportiert (vgl. Fig. 2c). Beim Formen, hier Falten, der Portion kann das Transportband 6, auf dem sich die Portion befindet still stehen und/oder sich weiterbewegen.

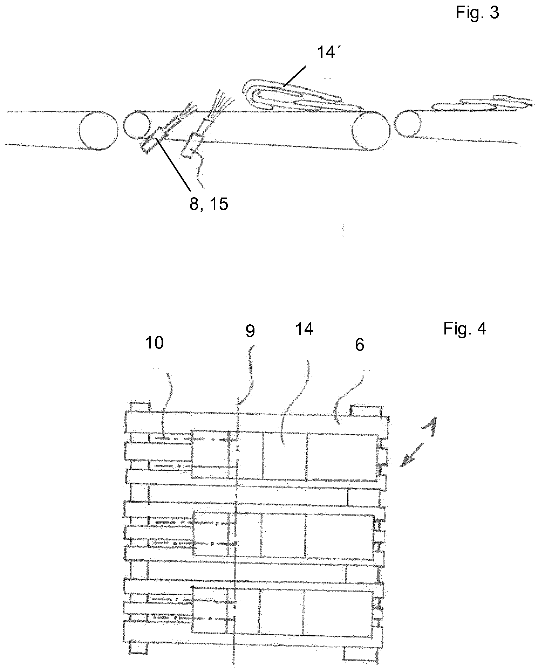

In **Figur 3** ist ein weiterer Form-, hier Faltmechanismus, dargestellt. Das Formen erfolgt hier mit einer Düse, vorzugsweise einer Luftdüse, mit der das vordere Ende der Portion abgehoben und auf das hintere Ende gefaltet wird. Ansonsten wird auf die Ausführungen zu Figur 2 Bezug genommen.

**Figur 4** zeigt die erfindungsgemäße Vorrichtung in Draufsicht. Es ist zu erkennen, dass das Transportband 6 als Riemenendlosband ausgeführt ist, auf dessen Transportebene 7 eine Portion 14 liegt. In dem vorliegenden Fall ist die Vorrichtung dreispurig ausgeführt, d.h. es werden 3 Lebensmittelriegel gleichzeitig aufgeschnitten. Jede Spur hat ihr eigenes Transportband 6, die aber gemeinsam angetrieben werden können. Jede Spur weist ein Formmittel 8, hier einen Hebel 10, der drehbar um eine Welle 9 vorgesehen ist, wobei in dem vorliegenden Fall alle Hebel 10 an einer Welle 9 drehfest vorgesehen sind. Zum Formen wird die Welle 9 im Uhrzeigersinn gedreht und nach dem Formen wieder in die in Figur 2a gezeigte Stellung gebracht.

### Bezugszeichenliste:

- 1: Ablagetisch
- 2: Lebensmittelriegel, Lebensmittelprodukt
- 3: Messeraufnahme
- 4: Auflagefläche
- 5: Aufschneidevorrichtung
- 6: Fördermittel
- 7: Förderebene
- 8: Mittel, Faltmittel
- 9: Drehpunkt
- 10: Hebel
- 11: Messer, Schneidmesser, Kreismesser, Sichelmesser
- 12: Lebensmittelscheiben
- 13: Hinteres Ende des Lebensmittelprodukts
- 14: Portion, Lebensmittelportion, bestehend aus mehreren Scheiben
- 14': gefaltete Portion
- 15: Düse

## Patentansprüche

1. Verfahren zum Aufschneiden eines Lebensmittelriegels (2) in Lebensmittelscheiben (12) und zum Portionieren von Lebensmittelscheiben mit einer Aufschneidevorrichtung (5), die ein Schneidmesser (11) aufweist, mit dem die Lebensmittelscheiben von dem Lebensmittelriegel abgetrennt werden, mit einem mit Transportmitteln versehenen Ablagetisch, auf dem die Lebensmittelscheiben zu Portionen (14) konfiguriert werden, und mit einem Fördermittel (6) mit einer Transportebene (7), auf der die Portionen (14) abtransportiert werden, **dadurch gekennzeichnet, dass** eine Portion (14) auf dem Fördermittel (6) anschließend in ihrer Form verändert wird, insbesondere gefaltet wird, indem ein Teil der Portion von der Transportebene abgehoben und auf den anderen Teil der Portion gelegt wird.

2. Verfahren nach Anspruch 1, **dadurch gekennzeichnet, dass** die Portion während ihres Abtransports geformt, insbesondere gefaltet wird.

3. Verfahren nach einem der voranstehenden Ansprüche, **dadurch gekennzeichnet**, das die Portion beim Formen zumindest zeitweise nicht weitertransportiert wird.

4. Verfahren nach einem der voranstehenden Ansprüche, **dadurch gekennzeichnet, dass** das vordere Ende der Portion über das hintere gelegt, insbesondere gedreht wird.

5. Verfahren nach einem der voranstehenden Ansprüche, **dadurch gekennzeichnet, dass** das Formen mit einem Hebel erfolgt.

6. Verfahren nach einem der voranstehenden Ansprüche, **dadurch gekennzeichnet, dass** das Formen mit einem Fluidum erfolgt.

7. Verfahren nach einem der voranstehenden Ansprüche, **dadurch gekennzeichnet**, das mehrere Portionen gleichzeitig in mehreren Spuren aufgeschnitten und/oder geformt werden.

8. Verfahren nach Anspruch 7, **dadurch gekennzeichnet, dass** die Portionen relativ zueinander ausgerichtet und dann vorzugsweise gleichzeitig gefaltet werden.

9. Vorrichtung zum Aufschneiden von Lebensmittelriegeln (2) in Lebensmittelscheiben (12) mit einem Schneidmesser (11) und einem Ablagetisch (1), auf den die Lebensmittelscheiben (12) nach dem Abtrennen fallen und dort zu einer Portion (14) konfiguriert werden, wobei die Vorrichtung ein Fördermittel (6) zum Abtransportieren der Portionen aufweist, **dadurch gekennzeichnet, dass** die Vorrichtung ein Faltmittel (8) zum Falten der Portion (14) aufweist, das unterhalb einer Transportebene (7) des Fördermittels (6) angeordnet ist.

10. Vorrichtung nach Anspruch 9, **dadurch gekennzeichnet, dass** das Mittel (8) beim Formen/Falten aus der Transportebene reversibel heraussteht.

11. Vorrichtung nach einem der Ansprüche 9 oder 10, **dadurch gekennzeichnet, dass** das Mittel (7) ein Hebel (10) aufweist, der sich vorzugsweise um einen Drehpunkt (9) dreht.

12. Vorrichtung nach einem der Ansprüche 9 - 11, **dadurch gekennzeichnet, dass** ein Sensor vorhanden ist, der die Position der Portion auf dem Fördermittel (6) ermittelt.

13. Vorrichtung nach einem der Ansprüche 9 - 12, **dadurch gekennzeichnet, dass** ein Faltmittel für mehrere Spuren vorgesehen ist.

## Claims

1. Method for slicing a foodstuff bar (2) into foodstuff slices (12) and for portioning foodstuff slices with a slicing device (5) which has a cutting blade (11) by way of which the foodstuff slices are severed from the foodstuff bar, having a depositing table which is provided with transporting means and on which the foodstuff slices are configured so as to form portions (14), and having a conveying means (6) having a transportation plane (7) on which the portions (14) are transported away, **characterized in that** a portion (14) in terms of the shape thereof is subsequently modified, in particular folded, on the conveying means (6) **in that** one part of the portion is lifted from the transportation plane and placed onto the other part of the portion.

2. Method according to Claim 1, **characterized in that** the portion while being transported away is shaped, in particular folded.

3. Method according to one of the preceding claims, **characterized in that** the portion when shaping is at least temporarily not transported onwards.

4. Method according to one of the preceding claims, **characterized in that** the front end of the portion is placed, in particular rotated, onto the rear end.

5. Method according to one of the preceding claims, **characterized in that** the shaping is performed by way of a lever.

6. Method according to one of the preceding claims, **characterized in that** the shaping is performed by way of a fluid.

7. Method according to one of the preceding claims, **characterized in that** a plurality of portions are simultaneously sliced and/or shaped in a plurality of tracks.

8. Method according to Claim 7, **characterized in that** the portions are aligned relative to one another and then preferably simultaneously folded.

9. Device for slicing foodstuff bars (2) into foodstuff slices (12), having a cutting blade (11) and a depositing table (1) onto which the foodstuff slices (12) upon severing drop and thereon are configured so as to form a portion (14), wherein the device has a conveying means (6) for transporting away the portions, **characterized in that** the device for folding the portions (14) has a folding means (8) which is disposed below a transportation plane (7) of the conveying means (6).

10. Device according to Claim 9, **characterized in that** the means (8) when shaping/folding projects in a reversible manner from the transportation plane.

11. Device according to either of Claims 9 and 10, **characterized in that** the means (7) has a lever (10) which preferably rotates about a pivot point (9).

12. Device according to one of Claims 9 to 11, **characterized in that** a sensor which determines the position of the portion on the conveying means (6) is present.

13. Device according to one of Claims 9 to 12, **characterized in that** a folding means for a plurality of tracks is provided.

## Revendications

1. Procédé pour trancher un aliment en boudin (2) en tranches d'aliment (12) et pour mettre en portions des tranches d'aliment avec un dispositif de coupe (5) qui présente une lame de coupe (11) avec laquelle les tranches d'aliment sont séparées de l'aliment en boudin, comprenant une table de pose pourvue de moyens de transport, sur laquelle les tranches d'aliment sont mises en portions (14), et comprenant un moyen de transport (6) avec un plan de transport (7) sur lequel les portions (14) sont enlevées,
**caractérisé en ce que** la forme d'une portion (14) sur le moyen de transport (6) est ensuite modifiée, en particulier par pliage, en soulevant une partie de la portion du plan de transport et en la plaçant sur l'autre partie de la portion.

2. Procédé selon la revendication 1, **caractérisé en ce que** la portion est formée, en particulier pliée, pendant son enlèvement.

3. Procédé selon l'une quelconque des revendications précédentes, **caractérisé en ce que** la portion, lors de son formage, n'est au moins temporairement pas transportée davantage.

4. Procédé selon l'une quelconque des revendications précédentes, **caractérisé en ce que** l'extrémité avant de la portion est placée par-dessus la portion arrière, en particulier est tournée.

5. Procédé selon l'une quelconque des revendications précédentes, **caractérisé en ce que** le formage s'effectue avec un levier.

6. Procédé selon l'une quelconque des revendications précédentes, **caractérisé en ce que** le formage s'effectue avec un fluide.

7. Procédé selon l'une quelconque des revendications précédentes, **caractérisé en ce que** plusieurs portions sont coupées et/ou formées simultanément dans plusieurs voies.

8. Procédé selon la revendication 7, **caractérisé en ce que** les portions sont orientées les unes par rapport aux autres puis sont pliées de préférence simultanément.

9. Dispositif pour trancher des aliments en boudin (2) en tranches d'aliments (12), comprenant une lame de coupe (11) et une table de pose (1) sur laquelle les tranches d'aliments (12) tombent après leur séparation et sont mises en portions (14), le dispositif présentant un moyen de transport (6) pour enlever les portions, **caractérisé en ce que** le dispositif présente un moyen de pliage (8) pour plier la portion (14), lequel est disposé en dessous d'un plan de transport (7) du moyen de transport (6).

10. Dispositif selon la revendication 9, **caractérisé en ce que** le moyen (8) fait saillie de manière réversible depuis le plan de transport lors du formage/du pliage.

11. Dispositif selon l'une quelconque des revendications 9 ou 10, **caractérisé en ce que** le moyen (7) présente un levier (10) qui tourne de préférence autour d'un pivot (9).

12. Dispositif selon l'une quelconque des revendications 9 à 11, **caractérisé en ce qu'**il est prévu un capteur qui détecte la position de la portion sur le moyen de transport (6).

13. Dispositif selon l'une quelconque des revendications 9 à 12, **caractérisé en ce qu'**il est prévu un moyen de pliage pour plusieurs voies.
